# EUROPÄISCHE PATENTSCHRIFT

(11) **EP 2 014 494 B1**
(45) Veröffentlichungstag und Bekanntmachung des Hinweises auf die Patenterteilung: **26.02.2014**
(21) Anmeldenummer: 08004841.6
(22) Anmeldetag: 14.03.2008
(51) Int. Cl.: B60J 5/04, B60J 10/08

(54) **Kraftfahrzeugtür**
Motor vehicle door
Porte de véhicule automobile

(30) Priorität: 13.07.2007 DE 102007032651
(43) Veröffentlichungstag der Anmeldung: 14.01.2009
(73) Patentinhaber: Dr. Ing. h.c. F. Porsche AG, 70435 Stuttgart (DE)
(72) Erfinder: Baumgart, Rainer, 70736 Fellbach (DE); Käfer, Richard, 74369 Löchgau (DE); Schlachter, Reimund, 75417 Muehlacker (DE)

(56) Entgegenhaltungen:
- EP-A- 1 093 948
- EP-A2- 1 142 777
- EP-A2- 1 216 866
- EP-A2- 1 327 545
- WO-A1-02/096690
- DE-A1- 19 648 528
- US-A1- 2003 188 492

## Beschreibung

Die Erfindung betrifft eine Kraftfahrzeugtür gem. dem Oberbegriff des Anspruchs 1. Aus der EP 1 093 948 B1 ist eine Kraftfahrzeugtür bekannt,
die ein Außenmodul A und ein Innenmodul I besitzt, wobei das Außenmodul A und das Innenmodul I durch Verschrauben, Nieten, Kleben oder dgl. miteinander verbindbar sind. Das Außenmodul A besteht aus einer Außenbeplankung und einem inneren Rahmenteil, an dem ein Aufprallträger und Scharniere festlegbar sind. Das Innenmodul besitzt Aufnahmemöglichkeiten für Türaggregate wie z.B. Fensterscheibe, Scheibenbetätigung, Lautsprecher oder dgl..

Bei dieser in Rahmenbauweise gefertigten Tür werden sowohl die Außenbeplankung als auch das innere Rahmenteil des Außenmoduls durch Blechpressteile aus Stahlblech gebildet. Das Innenmodul setzt sich aus einem tragenden Türrahmen und einem örtlich mit diesem verbundenen großflächigen Montageträgerblech zusammen. Der tragende Türrahmen umfasst einen oberen gebogenen Fensterrahmen, ein in Höhe der Fensterbrüstung verlaufendes etwa horizontal ausgerichtetes Rahmenteil und ein etwa U-förmig ausgebildetes unteres Rahmenteil, wobei sämtliche Teile des tragenden Türrahmens durch miteinander verschweißte Strangpressprofile aus einer Leichtmetalllegierung gebildet werden.

Eine derartige Kraftfahrzeugtür zeichnet sich durch eine gute Funktion aus und weist darüber hinaus eine hohe Steifigkeit auf. Die Fertigung des mehrteiligen tragenden Türrahmens ist jedoch aufwändig und kostenintensiv. Zudem verursacht der tragende Türrahmen ein erhebliches Gewicht.

Aufgabe der Erfindung ist es, eine Kraftfahrzeugtür der eingangs genannten Gattung so weiterzuentwickeln, dass sie bei vergleichbarer Steifigkeit einfacher herstellbar ist und ein geringeres Gewicht aufweist.

Gelöst wird diese Aufgabe durch die Merkmale des Anspruchs 1. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Verwendung von jeweils einem großflächigen, rahmenförmigen Druckgussteil aus einer Leichtmetalllegierung für das innere Rahmenteil und den oberen Fensterrahmen eine einen einfachen Aufbau aufweisende leichtgewichtige Kraftfahrzeugtür geschaffen wird. Durch die kraftschlüssige Verbindung beider Druckgussteile und die spezielle Anbindung des Montageträgerbleches an den oberen Fensterrahmen wird eine Kraftfahrzeugtür mit einer hohen Steifigkeit geschaffen. In die Druckgussteile können in einfacher Weise Anbindungen für Türschlösser, einen Halter eines Türfeststellers, eine Türversteifung, für Türscharniere und dgl. integriert werden, so dass die Anzahl der benötigten Bauteile der Kraftfahrzeugtür wesentlich verringert wird. Vorzugsweise sind alle wesentlichen Teile des Außenmoduls und des Innenmoduls aus einer Leichtmetalllegierung gefertigt, wodurch eine besonders leichtgewichtige Kraftfahrzeugtür geschaffen wird. Bei geschlossener Türfensterscheibe verkleidet diese durch ihre außenhautbündige Anordnung den dahinterliegenden Fensterrahmen, was stilistisch vorteilhaft ist.

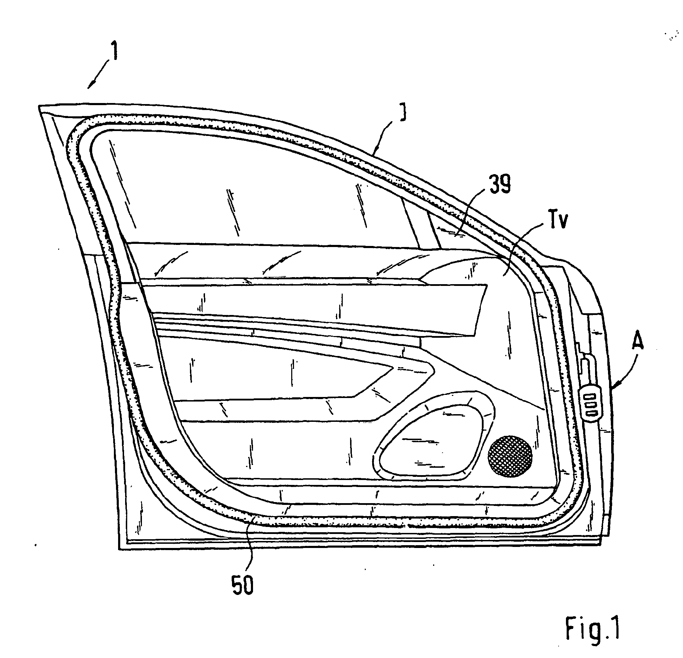

Ein Ausführungsbeispiel der Erfindung ist in der Zeichnung dargestellt und wird im Folgenden näher erläutert. Es zeigen
- Fig. 1: eine Innenansicht auf eine linke vordere Tür eines Kraftfahrzeuges
- Fig. 2: eine Explosionsdarstellung von innen auf ein Außenmodul A und ein Innenmodul I der Kraftfahrzeugtür

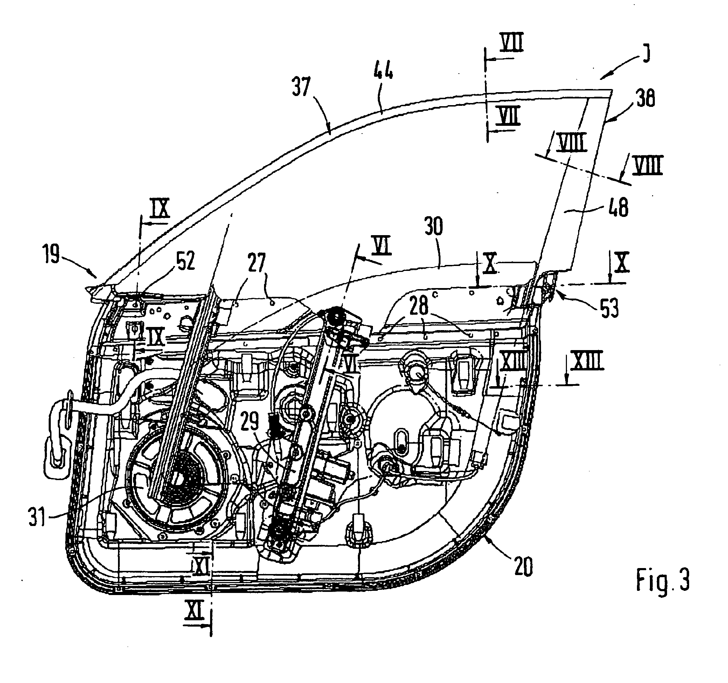

- Fig. 3: eine Ansicht von außen auf das Innenmodul I der Kraftfahrzeugtür
- Fig. 4: eine Explosionsdarstellung der einzelnen Baueile des Außenmoduls A
- Fig. 5: eine Explosionsdarstellung der einzelnen Bauteile des Innenmoduls I
- Fig. 6: einen Schnitt nach der Linie VI-VI der Fig. 3 in größerer Darstellung

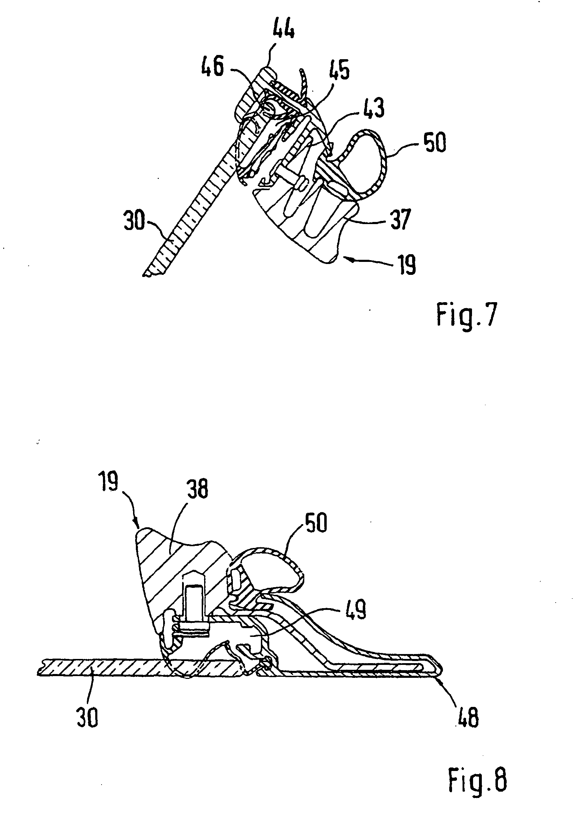

- Fig. 7: einen Schnitt nach der Linie VII-VII der Fig. 3 in größerer Darstellung
- Fig. 8: einen Schnitt nach der Linie VIII-VIII der Fig.3 in größerer Darstellung

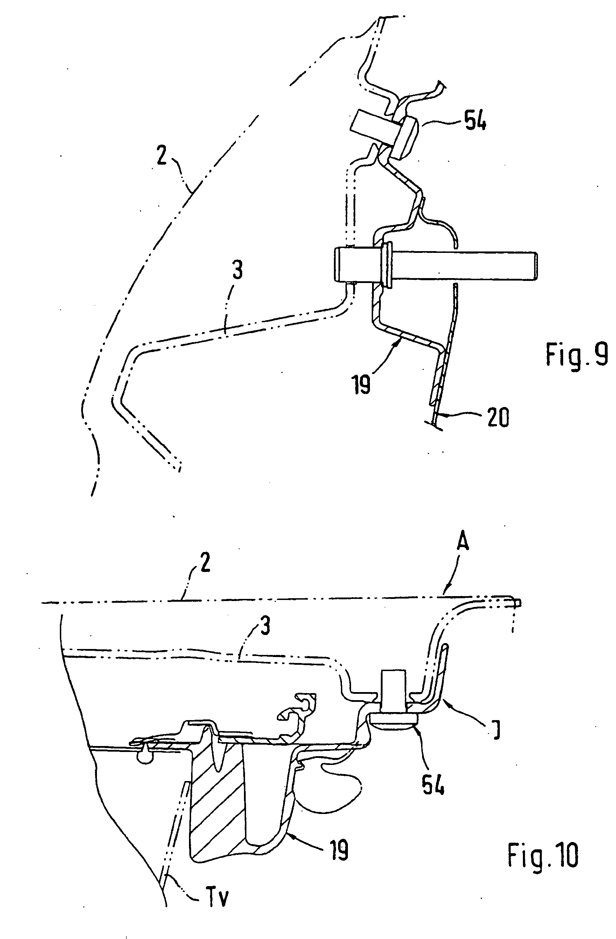

- Fig. 9: einen Schnitt nach der Linie IX-IX der Fig. 3 in größerer Darstellung
- Fig. 10: einen Schnitt nach der Linie X-X der Fig. 3 in größerer Darstellung

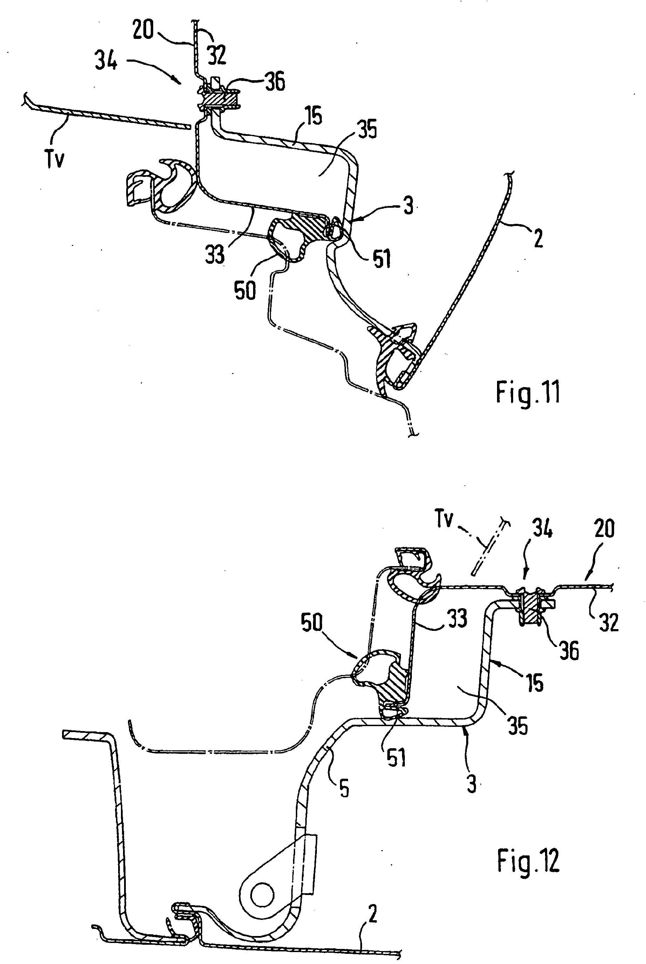

- Fig. 11: einen Schnitt nach der Linie XI-XI der Fig. 3 in größerer Darstellung
- Fig. 12: einen Schnitt nach der Linie XII-XII der Fig. 3 in größerer Darstellung und

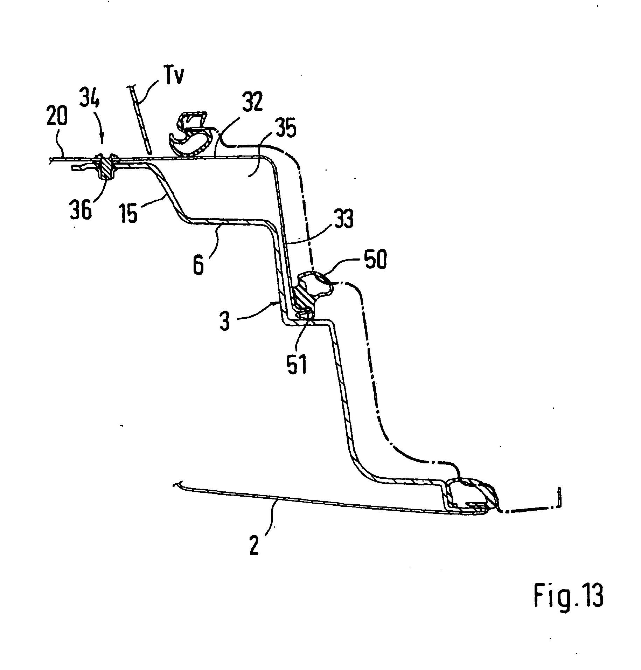

- Fig. 13: einen Schnitt nach der Linie XIII-XIII der Fig. 3 in größerer Darstellung.

Eine in Modulbauweise gefertigte Kraftfahrzeugtür 1 umfasst ein Außenmodul A, ein Innenmodul I und eine Türinnenverkleidung Tv. Das vorgefertigte Außenmodul A und das vorgefertigte Innenmodul I sind örtlich durch Verschrauben, Nieten, Kleben oder dgl. miteinander verbunden. Im Ausführungsbeispiel ist eine linke vordere Tür eines Kraftfahrzeuges dargestellt. Hintere Türen des Kraftfahrzeuges können ebenfalls einen gleichartigen Türaufbau aufweisen.

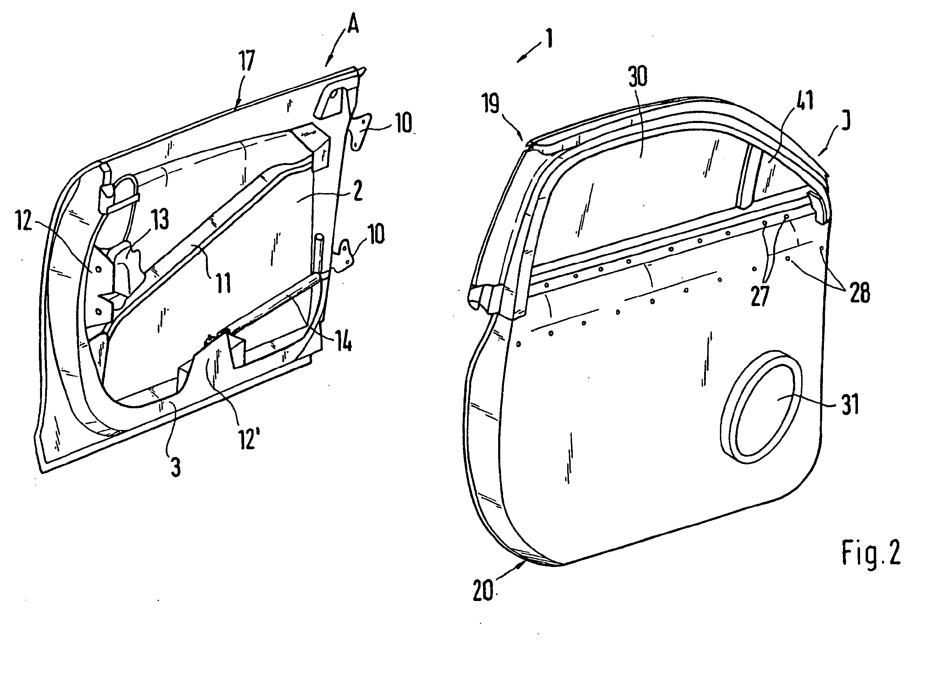

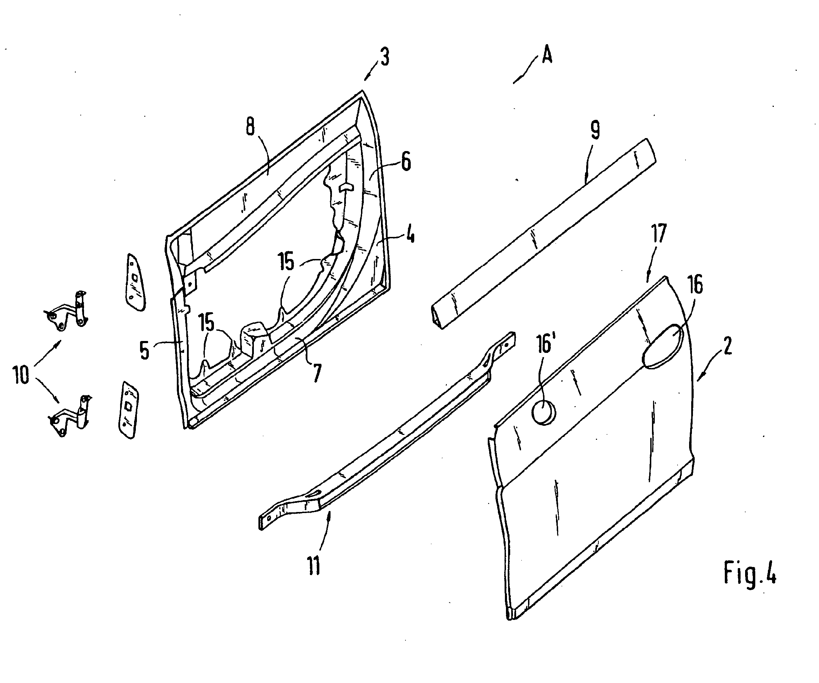

Das Außenmodul A besteht gem. den Fig. 2 und 4 im Wesentlichen aus einer Außenbeplankung 2 und einem umlaufenden inneren Rahmenteil 3. Das innere Rahmenteil 3 wird durch ein einstückiges Druckgussteil 4 aus einer Leichtmetalllegierung gebildet, beispielsweise aus einer Aluminium- oder Magnesiumlegierung. Im Ausführungsbeispiel besteht das innere Rahmenteil 3 aus einer Aluminiumlegierung. Das umlaufende innere Rahmenteil 3 setzt sich aus einem vorderen aufrechten Teilbereich 5, einem hinteren aufrechten Teilbereich 6, einem unteren Teilbereich 7 und einem oberen Teilbereich 8 zusammen. Der obere Teilbereich 8 und der untere Teilbereich 7 sind etwa horizontal ausgerichtet. Alle Teilbereiche 5 bis 8 des inneren Rahmenteils 3 weisen jeweils eine profilierte Querschnittsform auf. Der obere Teilbereich 8 ist auf der der Außenbeplankung 2 zugekehrten Seite mit einer durch ein Strangpressprofil gebildeten Schachtverstärkung 9 versehen, wobei die Schachtverstärkung 9 mit dem Rahmenteil 3 verbunden ist, z.B. durch Schraubbefestigungen.

Am inneren Rahmenteil 3 sind Scharniere 10 und ein diagonal verlaufender Aufprallträger 11 festlegbar. Ferner sind am inneren Rahmenteil 3 angeformte Aufnahmen 12, 12' für ein Türschloss 13 und einen Türfeststeller 14 vorgesehen, wobei die Aufnahme 12 dem Türschloss 13 und die Aufnahme 12' dem Türfeststeller 14 zugeordnet ist. Darüber hinaus weist das innere Rahmenteil 3 örtlich vorgesehene abgewinkelte Anbindungslaschen 15 zum Abstützen und Befestigen des Innenmoduls I auf.

Die Außenbeplankung 2 wird im Ausführungsbeispiel durch ein etwa 0,8 mm bis 1,5 mm dickes Blech aus einer Aluminiumlegierung gebildet, das randseitig durch Bördeln, Kleben oder dgl. mit dem äußeren Rand des inneren Rahmenteils 3 aus Druckguss verbunden ist. Die Außenbeplankung 2 könnte jedoch auch durch ein Kunststoffteil gebildet werden, das mit dem inneren Rahmenteil 3 verbunden ist. Die Außenbeplankung weist eine Öffnung 16 auf, in die eine nicht näher dargestellte Türaußenbetätigung einsetzbar ist. Durch eine weitere Öffnung 16' der Außenbeplankung ist ein Spiegelfuß eines nicht näher dargestellten Außenspiegels hindurchführbar.

Die Aufnahme 12 für das Türschloss 1 ist am hinteren Teilbereich 6 vorgesehen, wogegen die Aufnahme 12' für den Türfeststeller 14 am unteren Teilbereich 7 ausgebildet ist. Die beiden Scharniere 10 sind am aufrechten vorderen Teilbereich 5 des inneren Rahmenteiles 3 befestigt. Ein oberer Rand 17 des Außenmoduls A verläuft in Höhe einer Gürtellinie 18 des Kraftfahrzeuges.

Das Innenmodul I der Kraftfahrzeugtür 1 besteht im Wesentlichen aus einem oberen, umlaufenden Fensterrahmen 19 und einem mit diesem verbundenen unteren, kuchenblechartig ausgebildeten Montageträgerblech 20. Der obere Fensterrahmen 19 wird durch ein einstückiges Druckgussteil 21 aus einer Leichtmetalllegierung gebildet. Im Ausführungsbeispiel ist das einstückige Druckgussteil 21 aus einer Magnesiumlegierung gefertigt. Der Fensterrahmen 19 könnte jedoch auch durch ein Druckgussteil 21 aus einer Aluminiumlegierung gebildet werden.

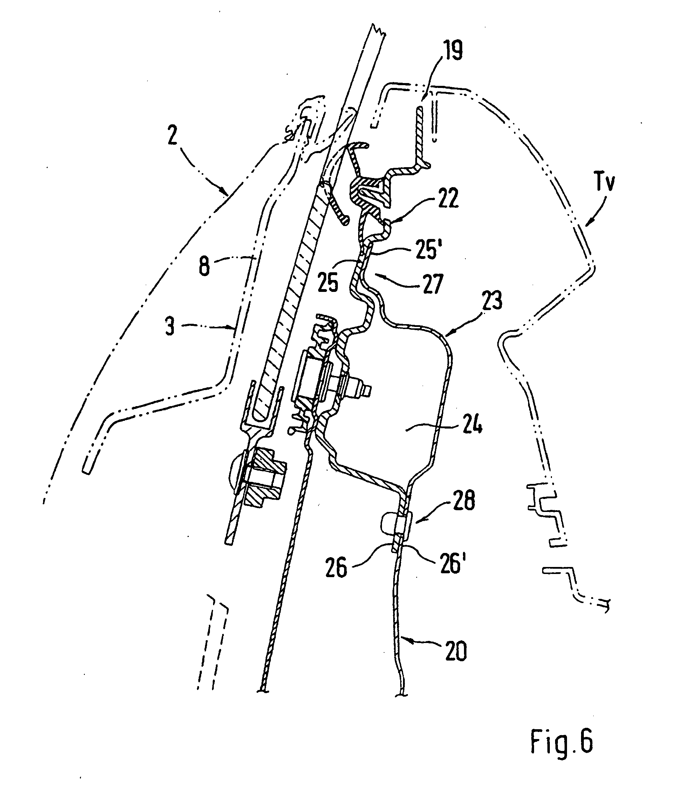

Ein unteres etwa horizontal ausgerichtetes Rahmenteil 22 des oberen Fensterrahmens 19 ist mit einem oberen Randbereich 23 des kuchenblechartigen Montageträgerblechs 20 unter Bildung eines längsverlaufenden Hohlträgers 24 verbunden. Der Fensterrahmen 19 und das Montageträgerblech 20 sind hierzu an gleichgerichteten Befestigungsflanschen 25, 25' und 26, 26' über beabstandet angeordnete Nietreihen 27, 28 miteinander verbunden. In Fig. 6 ist lediglich ein Niet der unteren Nietreihe 28 dargestellt.

Das großflächige kuchenblechartige Montageträgerblech 20 wird im Ausführungsbeispiel durch ein Blech aus einer Aluminiumlegierung gebildet und nimmt den kompletten Fensterheber 29 zur Verstellbewegung einer Türfensterscheibe 30, ein oder mehrere Lautsprecher 31 und ggf. weitere Türaggregate auf. Das kuchenblechartige Montageträgerblech 20 weist einen großflächigen Bodenabschnitt 32 auf, der randseitig zumindest vorne, hinten und unten mit einer L-förmig profilierten Abstellung 33 versehen ist. Im Bereich des Bodenabschnitts 32 erfolgt die Schraubbefestigung 34 zwischen Montageträgerblech 20 und inneren Rahmenteil 3, wobei zumindest in den Befestigungsbereichen am inneren Rahmenteil 3 angeformte Anbindungslaschen 15 zur Abstützung und Befestigung des Montageträgerblechs 20 ausgebildet sind. Die Befestigungsschrauben 36 der Schraubbefestigungen 34 für das Montageträgerblech 20 sind durch die montierte Türinnenverkleidung Tv abgedeckt.

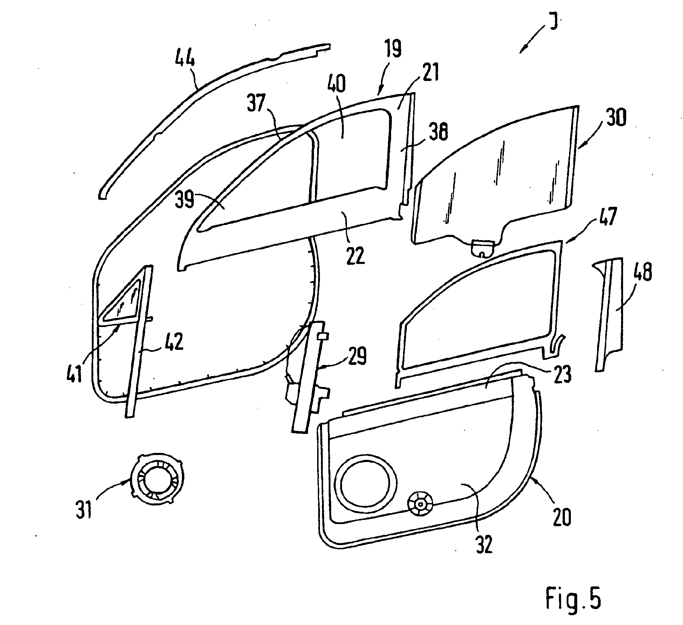

Gemäß Fig. 5 setzt sich der einstückig ausgebildete obere Fensterrahmen 19 aus einem bogenförmig verlaufenden oberen Rahmenteil 37, einem etwa horizontal ausgerichteten unteren Rahmenteil 22 und einem vertikal ausgerichteten hinteren Rahmenteil 38 zusammen. In einen vorderen Eckbereich 39 einer durch die Rahmenteile 37, 22 begrenzten Öffnung 40 des Fensterrahmens 19 ist ein Dreiecksfenster 41 eingesetzt, das an seinem hinteren Ende eine vertikal verlaufende Führungsschiene 42 aufweist, die den Fensterrahmen 19 nach unten hin überragt. Entlang des bogenförmig verlaufenden oberen Rahmenteiles 37 ist auf einen abgestellten Steg 43 des oberen Rahmenteiles 37 eine Zierleiste 44 aufgesetzt und mit diesem Steg 43 örtlich verbunden, beispielsweise durch Vernieten. Die Zierleiste 44 weist einen etwa U-förmigen, nach unten hin offenen Aufnahmeabschnitt 45 für den oberen Rand 46 der geschlossenen Türfensterscheibe 30 auf. Außenseitig ist auf den umlaufenden Fensterrahmen 19 eine rahmenförmige Fensterführung 47 aus Gummi oder Kunststoff aufgesetzt und daran befestigt. Auf das hintere, vertikal verlaufende Rahmenteil 38 des Fensterrahmens 19 ist außenseitig eine Blende 48 aufgesetzt, wobei an der Blende 48 eine integrierte Führungsschiene 49 für die Türfensterscheibe 30 vorgesehen ist. Die Türfensterscheibe 30 ist am vorderen Rand über die vertikal verlaufende Führungsschiene 42 des Dreiecksfensters 41 und am hinteren Rand über die Führungsschiene 49 der Blende 48 außenhautbündig geführt. Der komplette Fensterrahmen 19 ist in hochgefahrener Stellung der Türfensterscheibe 30 durch diese vollständig verkleidet und von außen her nicht sichtbar. Eine umlaufende Türhauptdichtung 50 ist einerseits am oberen Fensterrahmen 19 und andererseits an einem umlaufenden Aufsteckflansch 51 des Montageträgerblechs 20 befestigt.

Eine besonders steife Ausgestaltung der Kraftfahrzeugtür 1 wird dadurch erreicht, dass der obere Fensterrahmen 19 im Bereich der Türbrüstung an seinem vorderen und hinten liegenden Ende bei 52 bzw. 53 jeweils über zumindest ein lösbares Verbindungselement 54 an das innere Rahmenteil 3 angeschlossen ist. Im Ausführungsbeispiel sind bei 52 und 53 jeweils zwei beabstandet angeordnete Verbindungselemente zwischen Fensterrahmen 19 und innerem Rahmenteil 3 vorgesehen.

## Patentansprüche

1. Kraftfahrzeugtür (1),
- die ein Außenmodul (A) und ein Innenmodul (I) besitzt,
- das Außenmodul (A) und das Innenmodul (I) durch Verschrauben, Nieten, Kleben oder dgl. miteinander verbindbar sind,
- das Außenmodul (A) aus einer Außenbeblankung (2) und einem inneren Rahmenteil (3) besteht, an dem ein Aufprallträger (11) und Scharniere (10) festlegbar sind,
- das Innenmodul (I) Aufnahmemöglichkeiten für Türaggregate wie z.B. Fensterscheibe, Scheibenbetätigung, Lautsprecher oder dgl. besitzt,
**dadurch gekennzeichnet, dass**
- das innere Rahmenteil (3) des Außenmoduls (A) durch ein einstückiges Druckgussteil (4) aus einer Leichtmetalllegierung gebildet wird,
- das Innenmodul (I) aus einem oberen umlaufenden Fensterrahmen (19) und einem mit diesen verbundenen unteren Montageträgerblech (20) besteht,
- der obere Fensterrahmen (19) ebenfalls als ein einstückiges Druckgussteil (21) aus einer Leichtmetalllegierung ausgebildet ist,
ein unteres Rahmenteil (22) des oberen Fensterrahmens (19) unter Bildung eines längsverlaufenden Hohlträgers (24) an den oberen Randbereich (23) des kuchenblechartigen Montageträgerblechs (20) angeschlossen ist,
- der obere Fensterrahmen (19) örtlich über lösbare Verbindungselemente (54) an das innere Rahmenteil (3) angebunden ist.

2. Kraftfahrzeugtür nach Anspruch 1, **dadurch gekennzeichnet, dass** das innere Rahmenteil (3) aus einer Aluminium- oder Magnesiumlegierung gefertigt ist.

3. Kraftfahrzeugtür nach den Ansprüchen 1 und 2, **dadurch gekennzeichnet, dass** das innere Rahmenteil (3) integrierte Aufnahmen (12, 12') für ein Türschloss (13), für Türscharniere (10), einen Aufprallträger (11) oder dgl. aufweist.

4. Kraftfahrzeugtür nach einem oder mehreren der vorangegangenen Ansprüche, **dadurch gekennzeichnet, dass** das innere Rahmenteil (3) örtlich abgestellte Anbindungslaschen (15) zum Abstützen und Befestigen des Montageträgerblechs (20) aufweist.

5. Kraftfahrzeugtür nach Anspruch 1, **dadurch gekennzeichnet, dass** der obere Fensterrahmen (19) durch ein Druckgussteil (21) aus einer Magnesiumlegierung gebildet wird.

6. Kraftfahrzeugtür nach den Ansprüchen 1 und 5, **dadurch gekennzeichnet, dass** in eine Öffnung (40) des Fensterrahmens (19) ein Dreiecksfenster (41) mit einer vertikalen Führungsschiene (42) eingesetzt und mit dem Fensterrahmen (19) verbunden ist.

7. Kraftfahrzeugtür nach einem oder mehreren der vorangegangenen Ansprüche, **dadurch gekennzeichnet, dass** entlang eines oberen Rahmenteiles (37) des Fensterrahmens (19) eine Zierleiste (44) verläuft, die mit einem Steg (43) des oberen Rahmenteiles (37) verbunden ist.

8. Kraftfahrzeugtür nach einem oder mehreren der vorangegangenen Ansprüche, **dadurch gekennzeichnet, dass** auf ein profiliertes hinteres Rahmenteil (38) des Fensterrahmens (19) eine Blende (48) aufgesetzt ist, die eine integrierte Führungsschiene (49) für die außenhautbündig angeordnete Türfensterscheibe (30) aufweist.

9. Kraftfahrzeugtür nach einem oder mehreren der vorangegangenen Ansprüche, **dadurch gekennzeichnet, dass** ein profilierter oberer Randbereich (23) des Montageträgerblechs (20) über zwei beabstandet angeordnete Nietreihen (27, 28) mit einem horizontal ausgerichteten unteren Rahmenteil (22) des Fensterrahmens (19) unter Bildung eines längsverlaufenden Hohlträgers (24) verbunden ist.

10. Kraftfahrzeugtür nach einem oder mehreren der vorangegangenen Ansprüche, **dadurch gekennzeichnet, dass** das Montageträgerblech (20) über Befestigungsschrauben (36) mit dem inneren Rahmenteil (3) verbunden ist, wobei die Befestigungsschrauben (36) mit Abstand zum äußeren Rand des Montagträgerblechs (20) angeordnet und durch die Türinnenverkleidung (Tv) verdeckt sind.

11. Kraftfahrzeugtür nach einem oder mehreren der vorangegangenen Ansprüche, **dadurch gekennzeichnet, dass** die Außenbeplankung (2) durch ein etwa 0,8 bis 1,5 mm dickes Blech aus einer Aluminiumlegierung gebildet wird, das randseitig durch Bördeln, Kleben oder dgl. mit dem äußeren Rand des inneren Rahmenteils (3) verbunden ist.

## Claims

1. Motor vehicle door (1)
- which has an outer module (A) and an inner module (I),
- the outer module (A) and the inner module (I) can be connected to each other by screwing, riveting, adhesive bonding or the like,
- the outer module (A) comprises an outer panel (2) and an inner frame part (3) to which an impact support (11) and hinges (10) can be fixed,
- the inner module (I) has accommodation options for door assemblies, such as, for example, the window pane, pane actuation, speakers or the like,
**characterized in that**
- the inner frame part (3) of the outer module (A) is formed by a single-piece diecast part (4) made of a light metal alloy,
- the inner module (I) comprises an upper encircling window frame (19) and a lower assembly support sheet (20) which is connected to the latter,
- the upper window frame (19) is likewise designed as a single-piece diecast part (21) made of a light metal alloy,
- a lower frame part (22) of the upper window frame (19) is connected to the upper border region (23) of the baking-sheet-like assembly support sheet (20) with a longitudinally running hollow support (24) being formed, and
- the upper window frame (19) is connected locally to the inner frame part (3) via releasable connecting elements (54).

2. Motor vehicle door according to Claim 1, **characterized in that** the inner frame part (3) is manufactured from an aluminum or magnesium alloy.

3. Motor vehicle door according to Claims 1 and 2, **characterized in that** the inner frame part (3) has integrated receptacles (12, 12') for a door lock (13), for door hinges (10), an impact support (11) or the like.

4. Motor vehicle door according to one or more of the preceding claims, **characterized in that** the inner frame part (3) has locally angled connecting tabs (15) for supporting and fastening the assembly support sheet (20).

5. Motor vehicle door according to Claim 1, **characterized in that** the upper window frame (19) is formed by a diecast part (21) made of a magnesium alloy.

6. Motor vehicle door according to Claims 1 and 5, **characterized in that** a triangular window (41) with a vertical guide rail (42) is inserted into an opening (40) in the window frame (19) and is connected to the window frame (19).

7. Motor vehicle door according to one or more of the preceding claims, **characterized in that** a decorative strip (44) runs along an upper frame part (37) of the window frame (19) and is connected to a web (43) of the upper frame part (37).

8. Motor vehicle door according to one or more of the preceding claims, **characterized in that** a cover (48) which has an integrated guide rail (49) for the door window pane (30), which is arranged flush with the outer skin, is placed onto a profiled rear frame part (38) of the window frame (19).

9. Motor vehicle door according to one or more of the preceding claims, **characterized in that** a profiled upper border region (23) of the assembly support sheet (20) is connected via two spaced-apart rivet rows (27, 28) to a horizontally oriented, lower frame part (22) of the window frame (19) with a longitudinally running hollow support (24) being formed.

10. Motor vehicle door according to one or more of the preceding claims, **characterized in that** the assembly support sheet (20) is connected to the inner frame part (3) via fastening screws (36), the fastening screws (36) being arranged at a distance from the outer border of the assembly support sheet (20) and being covered by the interior door molding (Tv).

11. The motor vehicle door according to one or more of the preceding claims, **characterized in that** the outer panel (2) is formed by a sheet of aluminum alloy which is approximately 0.8 to 1.5 mm thick and the border side of which is connected to the outer border of the inner frame part (3) by crimping, adhesive bonding or the like.

## Revendications

1. Porte de véhicule automobile (1),
- qui possède un module extérieur (A) et un module intérieur (I),
- le module extérieur (A) et le module intérieur (I) pouvant être connectés l'un à l'autre par visage, rivetage, collage ou similaire,
- le module extérieur (A) se composant d'un panneau extérieur (2) et d'une partie de cadre intérieure (3) sur laquelle peuvent être fixés un support de collision (11) et des charnières (10),
- le module intérieur (I) possédant des possibilités de réception pour des éléments de porte comme par exemple une vitre de fenêtre, un actionnement de vitre, des haut-parleurs ou similaires,
**caractérisée en ce que**
- la partie de cadre intérieure (3) du module extérieur (A) est formée par une pièce coulée sous pression d'une seule pièce (4) en alliage de métaux légers,
- le module intérieur (I) se compose d'un cadre de fenêtre périphérique supérieur (19) et d'une tôle de support de montage inférieure (20) connectée à celui-ci,
- le cadre de fenêtre supérieur (19) est également réalisé sous forme de pièce coulée sous pression d'une seule pièce (21) en un alliage de métaux légers,
- une partie de cadre inférieure (22) du cadre de fenêtre supérieur (19) est raccordée à la région de bord supérieure (23) de la tôle de support de montage (20) en forme de plaque de cuisson en formant un support creux (24) s'étendant longitudinalement, et
- le cadre de fenêtre supérieur (19) est raccordé localement par le biais d'éléments de connexion détachables (54) à la partie de cadre intérieure (3).

2. Porte de véhicule automobile selon la revendication 1, **caractérisée en ce que** la partie de cadre intérieure (3) est fabriquée en un alliage d'aluminium ou de magnésium.

3. Porte de véhicule automobile selon les revendications 1 et 2, **caractérisée en ce que** la partie de cadre intérieure (3) présente des logements intégrés (12, 12') pour une serrure de porte (13), pour des charnières de porte (10), pour un support de collision (11) ou similaires.

4. Porte de véhicule selon l'une quelconque ou plusieurs des revendications précédentes, **caractérisée en ce que** la partie de cadre intérieure (3) présente des pattes de raccordement inclinées localement (15) pour supporter et fixer la tôle de support de montage (20).

5. Porte de véhicule automobile selon la revendication 1, **caractérisée en ce que** le cadre de fenêtre supérieur (19) est formé par une pièce coulée sous pression (21) en un alliage de magnesium.

6. Porte de véhicule automobile selon les revendications 1 et 5, **caractérisée en ce que** dans une ouverture (40) du cadre de fenêtre (19) est insérée une fenêtre triangulaire (41) avec un rail de guidage vertical (42), laquelle est connectée au cadre de fenêtre (19).

7. Porte de véhicule automobile selon l'une quelconque ou plusieurs des revendications précédentes, **caractérisée en ce que** le long d'une partie de cadre supérieure (37) du cadre de fenêtre (19) s'étend une baguette couvre-joint (44) qui est connectée à une nervure (43) de la partie de cadre supérieure (37).

8. Porte de véhicule automobile selon l'une quelconque ou plusieurs des revendications précédentes, **caractérisée en ce qu'**un bandeau (48) est posé sur une partie de cadre arrière profilée (38) du cadre de fenêtre (19), lequel bandeau présente un rail de guidage intégré (49) pour la vitre de fenêtre de porte (30) disposée en affleurement contre la peau extérieure.

9. Porte de véhicule automobile selon l'une quelconque ou plusieurs des revendications précédentes, **caractérisée en ce qu'**une région de bord supérieure profilée (23) de la tôle de support de montage (20) est connectée par le biais de deux rangées espacées de rivets (27, 28) à une partie de cadre inférieure (22), orientée horizontalement, du cadre de fenêtre (19) en formant un support creux (24) s'étendant longitudinalement.

10. Porte de véhicule automobile selon l'une quelconque ou plusieurs des revendications précédentes, **caractérisée en ce que** la tôle de support de montage (20) est connectée par le biais de vis de fixation (36) à la partie de cadre intérieure (3), les vis de fixation (36) étant disposées à distance du bord extérieur de la tôle de support de montage (20) et étant recouvertes par l'habillage intérieur de porte (Tv).

11. Porte de véhicule automobile selon l'une quelconque ou plusieurs des revendications précédentes, **caractérisée en ce que** le panneau extérieur (2) est formé par une tôle en alliage d'aluminium d'une épaisseur d'environ 0,8 à 1,5 mm, qui est connectée sur son bord par bordage, collage ou similaire, au bord extérieur de la partie de cadre intérieure (3).
